# EUROPÄISCHE PATENTSCHRIFT

(11) **EP 0 563 598 B1**
(45) Veröffentlichungstag und Bekanntmachung des Hinweises auf die Patenterteilung: **18.09.1996**
(21) Anmeldenummer: 93103344.3
(22) Anmeldetag: 03.03.1993
(51) Int. Cl.: H02B 1/44, H02B 1/26

(54) **Gehäuse zum Einbau von elektrischen oder elektronischen Bauteilen bzw. Baugruppen**
Cabinet for installation of electric or electronic components and assemblies
Boîtier pour le montage de composants et assemblages électriques ou électroniques

(30) Priorität: 01.04.1992 DE 9204473 U
(43) Veröffentlichungstag der Anmeldung: 06.10.1993
(73) Patentinhaber: BOPLA GEHÄUSE SYSTEME GmbH, D-32257 Bünde (DE)
(72) Erfinder: Behrendt, Horst, W-4972 Löhne 4 (DE); Krömer, Andreas, W-4900 Herford (DE); Niehausmeier, Uwe, W-4986 Rödinghausen (DE)
(74) Vertreter: Patentanwälte Dipl.-Ing. Bodo Thielking Dipl.-Ing. Otto Elbertzhagen

(56) Entgegenhaltungen:
- DE-U- 9 204 473
- GB-A- 2 187 228
- US-A- 4 895 271
- IBM TECHNICAL DISCLOSURE BULLETIN, Bd. 30, Nr. 11, April 1988, Armonk, NY, US, Seiten 370-371, XP000095649, 'Plastic snap-in hinge'

## Beschreibung

Die Erfindung betrifft ein Gehäuse zum Einbau von elektrischen oder elektronischen Bauteilen bzw. Baugruppen mit einem Gehäuseunterteil und einem Gehäuseoberteil, wobei Gehäuseunterteil und Gehäuseoberteil über Verbindungsvorrichtungen miteinander verbindbar sind und wobei eine Verbindungsvorrichtung ein Scharnier ist, das Ausnehmungen bzw. Vorsprünge in beiden Schenkeln aufweist, die formschlüssig in zugehörige Bereiche einerseits am Gehäuseoberteil und andererseits am Gehäuseunterteil eingreifen.

Bei einem bekannten Gehäuse dieser Art (IBM Technical Disclosure Bulletin, Bd. 30, Nr. 11, April 1988, S. 370 bis 371) ist das Scharnier als Filmscharnier ausgebildet. Die Lebensdauer derartiger Filmscharniere ist begrenzt. Das bekannte Gehäuse ist ausschließlich als Klappgehäuse ausgebildet.

Es sind auch andere Gehäuse (GB-A-2 187 228) bekannt, bei denen die Verbindung zwischen Oberteil und Unterteil über Scharniere erfolgt, deren Schenkel einerseits am Oberteil und andererseits am Unterteil befestigt sind.

Auch ist es bekannt, die Fixierung des Oberteils am Unterteil über Befestigungsschrauben oder Rastvorrichtungen vorzunehmen.

Bei den bekannten Gehäusen sind Art und Anbririgungsart der Verbindungsvorrichtungen von vornnerein bei der Fertigung festgelegt.

Ein Wechsel zwischen unterschiedlichen Verbindungsvorrichtungen und ein Wechsel des Anbringungsortes (beispielsweise Scharnier rechts oder links) ist bei den bekannten Lösungen nicht möglich.

Ausgehend von diesem Stand der Technik liegt der Erfindung die Aufgabe zugrunde, ein Gehäuse der als bekannt vorausgesetzten Art so auszubilden, daß es wahlweise mit unterschiedlichen Verbindungsvorrichtungen bestückbar ist.

Zur Lösung dieser Aufgabe wird vorgeschlagen, daß sowohl Gehäuseoberteil als auch Gehäuseunterteil angeformte Ansätze aufweisen, an welchen wahlweise unterschiedliche Kunststoffteile angebaut werden können, wobei einige Kunststoffteile Verbindungsbereiche mit dem als Klavierbandscharnier ausgebildeten Scharnier und andere Kunststoffteile die zu einander komplementären Bereiche eines Rastverschlusses bilden.

Bei einer bevorzugten Ausführungsform weist ein Kunststoffteil einen Sperrzylinder auf, dessen Sperrglied einen Bereich des gegenüberliegenden Kunststoffteils blockierend hintergreift.

Ferner ist es zweckmäßig, daß die am Gehäuseoberteil und am Gehäuseunterteil angeformten Ansätze Aufnahmeöffnungen für klemmend eingreifende Zapfen der zugehörigen Kunststoffteile aufweisen. Eine solche Ausgestaltung erlaubt einen genauen und sicheren Anbau der unterschiedlichen Kunststoffteile.

Schließlich hat es sich als zweckmäßig erwiesen, daß die am Gehäuseoberteil und am Gehäuseunterteil angeformten, einander gegenüberliegenden Ansätze mit Aufnahmeöffnungen versehen sind, in denen Verbindungsschrauben und Gegenstücke liegen.

Nachstehend werden bevorzugte Ausführungsformen der Erfindung anhand der Zeichnung im einzelnen beschrieben.

Es zeigen:
- Figur 1 -: eine perspektivische Ansicht eines Gehäuses mit einem Scharnier auf der linken Seite und einem abschließbaren Rastverschluß auf der rechten Seite,
- Figur 2 -: einen Teilbereich von Gehäuseoberteil und Gehäuseunterteil in perspektivischer Darstellung,
- Figur 3 -: ein Klavierbandscharnier mit zugehörigen Kunststoffanbauteilen in perspektivischer Explosicnsdarstellung,
- Figur 4 -: die zueinander komplementären Kunststoffteile, die einen Rastverschluß bilden,
- Figur 5 -: die Abbildung gemäß Figur 4 mit einem in Explosionsdarstellung gezeichneten Sperrzylinder,

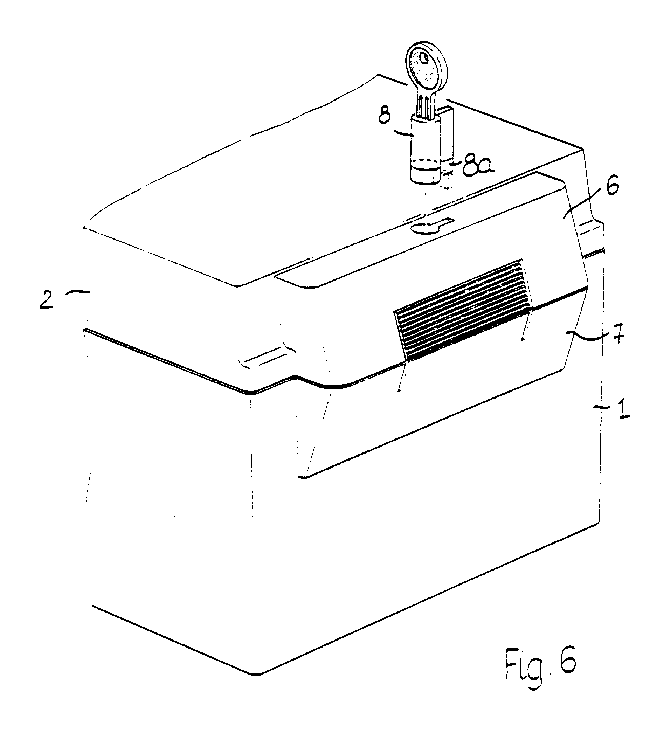

- Figur 6 -: eine perspektivische Darstellung einer Gehäuseseite mit Rastvorrichtung und angedeutetem Sperrzylinder.

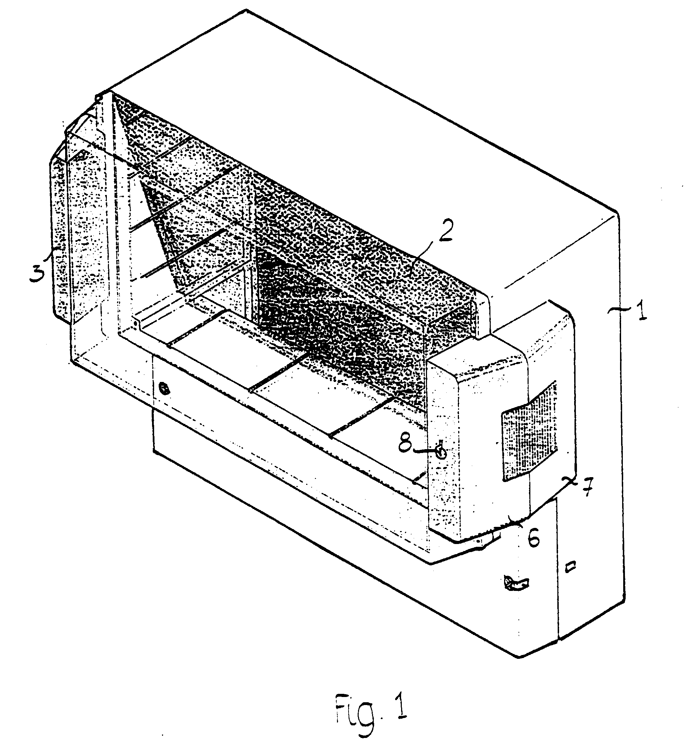

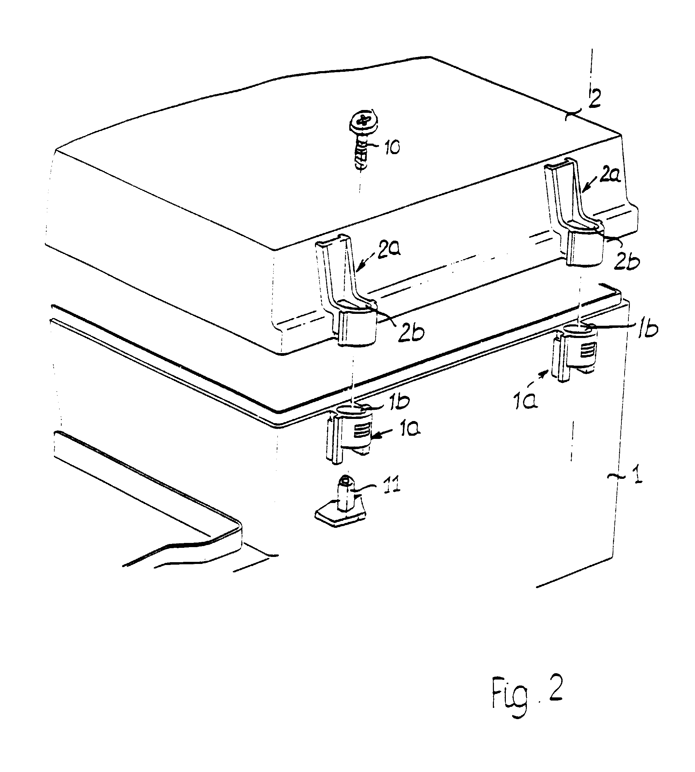

In den unterschiedlichen Ausführungsformen sind gleiche oder einander entsprechende Teile mit gleichen Bezugszeichen versehen. Die Ausführungsformen gemäß Figuren 1 und 2 einerseits und 6 andererseits unterscheiden sich lediglich durch die Form des Gehäuseunterteils 1.

Einem Gehäuseunterteil 1 liegt ein Gehäuseoberteil 2 gegenüber. An beiden Seiten des Gehäuseoberteils sind jeweils zwei Ansätze 2a angeformt, welche durchgehende Aufnahmeöffnungen 2b aufweisen. Den Ansätzen 2a liegen komplementäre Ansätze la an der Unterseite des Gehäuseunterteils 1 gegenüber, welche Aufnahmeöffnungen 1b aufweisen.

In die Aufnahmeöffnungen 2b des Gehäuseoberteils 2 können Zapfen 3a eines Kunststoffteils 3 ebenso eingreifen wie Zapfen 6b eines Kunststoffteils 6. In die Aufnahmeöffnungen 1b der Ansätze la können Zapfen 4a eines Kunststoffteils 4 ebenso eingreifen wie Zapfen 7b eines Kunststoffteils 7.

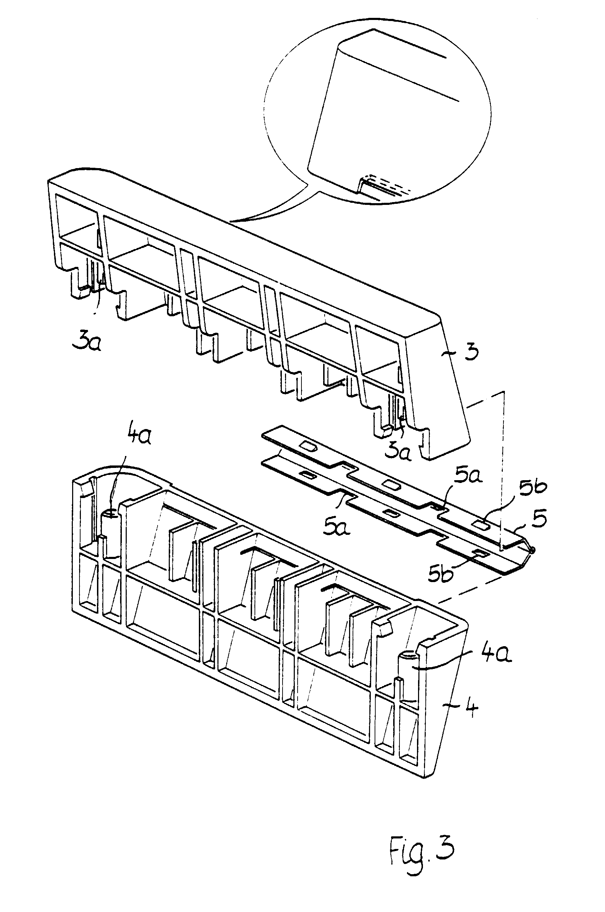

Die Kunststoffteile 3 und 4 dienen zur Aufnahme eines Klavierbandscharniers 5, das in Figur 3 perspektivisch dargestellt ist. Das Klavierbandscharnier 5 besitzt Ausnehmungen 5a und als Ausprägungen ausgebildete Vorsprünge 5b jeweils an beiden Schenkeln, welche formschlüssig mit entsprechenden Gegenstücken einerseits des Kunststoffteils 3 und andererseits des Kunststoffteils 4 im Eingriff stehen.

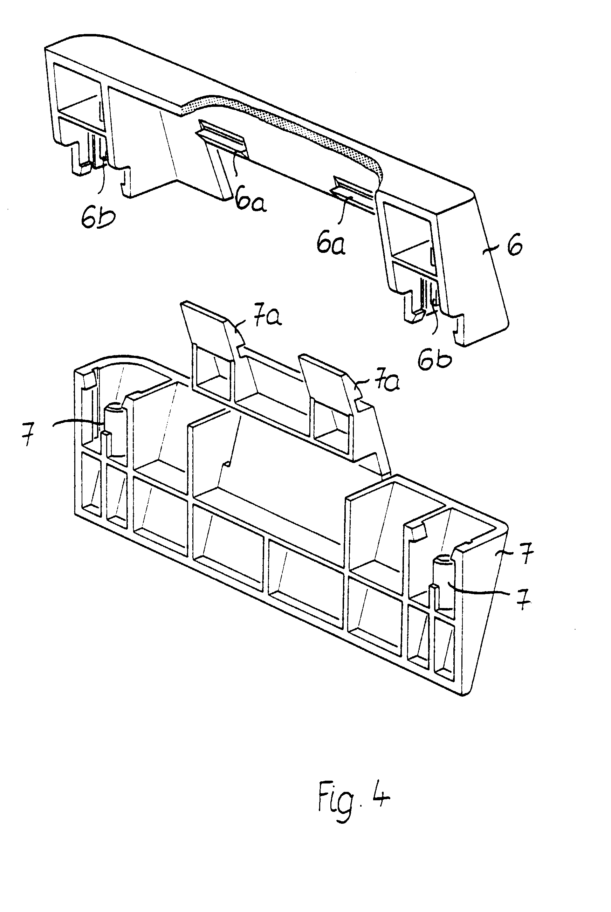

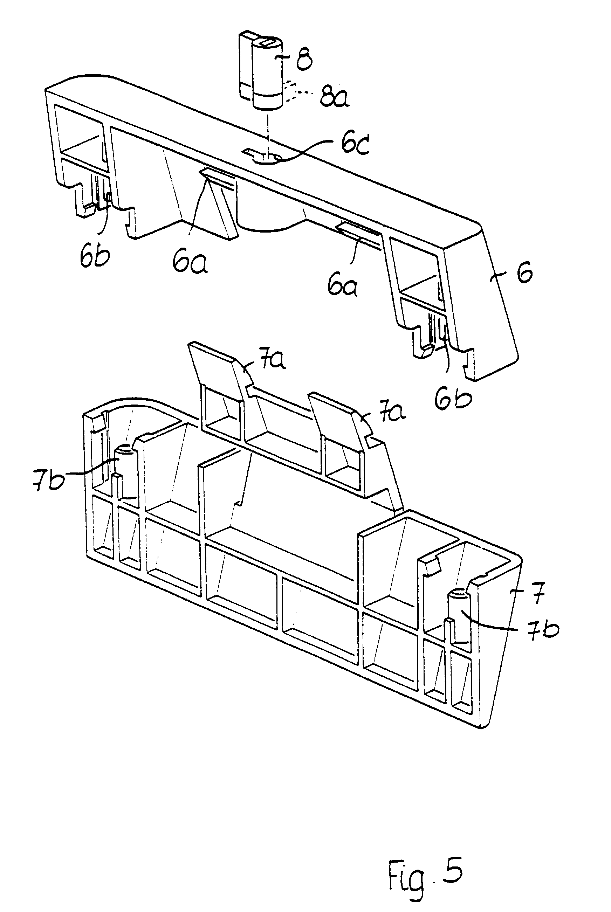

In Figur 4 sind die zueinander komplementären Kunststoffteile 6 und 7 eines Rastverschlusses dargestellt. Im verrasteten Zustand greifen zwei federnd elastische Rastklinken 7a hinter komplementäre Rastnasen 6a. In Figur 5 ist das Kunststoffteil 6, das in Figur 4 nur teilweise dargestellt ist, vollständig gezeigt. Dieses Kunststoffteil 6 besitzt eine profilzylindrische Ausnehmung 6c, in die ein als Profilyzlinder ausgebildeter Sperrzylinder 8 einsetzbar ist. Der Sperrzylinder besitzt ein verschwenkbares Sperrglied, das im gesperrten Zustand einen zugehörigen gegenüberliegenden Bereich des Kunststoffteils 7 sperrend hintergreift.

Sowohl Gehäuseunterteil als auch Gehäuseoberteil sind bezüglich der Befestigungsbereiche bei allen Ausführungsformen gleich ausgebildet. An die angeformten Ansätze können deshalb wahlweise die unterschiedlichen Kunststoffteile angebaut werden, indem die passenden Zapfen klemmend in die Bohrungen der Ansätze eingreifen. Die als Anbauteile dienenden Kunststoffteile 3 und 4 sowie 6 und 7 können mit den zugehörigen Gehäuseteilen beispielsweise verrastet, verschraubt oder verklebt werden.

Für ein Verschrauben genügt es, in einen Ansatz 1a oder 2a ein Gegenstück 11 oder eine Mutter einzusetzen und durch die Bohrung des jeweils gegenüberliegenden Ansatzes eine Schraube 10 durchzuschrauben.

## Patentansprüche

1. Gehäuse zum Einbau von elektrischen oder elektronischen Bauteilen bzw. Baugruppen mit einem Gehäuseunterteil (1) und einem Gehäuseoberteil (2), wobei Gehäuseunterteil (1) und Gehäuseoberteil (2) über Verbindungsvorrichtungen miteinander verbindbar sind und wobei eine Verbindungsvorrichtung ein Scharnier ist, das Ausnehmungen (5a) bzw. Vorsprünge (5b) in beiden Schenkeln aufweist, die formschlüssig in zugehörige Bereiche einerseits am Gehäuseoberteil (2) und andererseits am Gehäuseunterteil (1) eingreifen,
dadurch gekennzeichnet,
daß sowohl Gehäuseoberteil (2) als auch Gehäuseunterteil (1) angeformte Ansätze (2a) aufweisen, an welchen wahlweise unterschiedliche Kunststoffteile (3, 4, 6, 7) angebaut werden können, wobei einige Kunststoffteile (3, 4) die Bereiche zur Verbindung mit dem als Klavierbandscharnier (5) ausgebildeten Scharnier und andere Kunststoffteile (6, 7) die zueinander komplementären Bereiche eines Rastverschlusses bilden.

2. Gehäuse nach Anspruch 1,
dadurch gekennzeichnet,
daß ein Kunststoffteil (6) einen Sperrzylinder (8) aufweist, dessen Sperrglied (8a) einen Bereich des gegenüberliegenden Kunststoffteils (7) blockierend hintergreift.

3. Gehäuse nach Anspruch 1 oder 2,
dadurch gekennzeichnet,
daß die am Gehäuseoberteil (2) und am Gehäuseunterteil (1) angeformten Ansätze (2a bzw. la) Aufnahmeöffnungen (2b bzw. lb) für klemmend eingreifende Zapfen (3a bzw. 4a; 6b bzw. 7b) der zugehörigen Kunststoffteile (3 bzw. 4; 6 bzw. 7) aufweisen.

4. Gehäuse nach einem oder mehreren der Ansprüche 1 bis 3,
dadurch gekennzeichnet,
daß die am Gehäuseoberteil (2) und am Gehäuseunterteil (1) angeformten, einander gegenüberliegenden Ansätze (2a bzw. la) mit Aufnahmeöffnungen (2b bzw. lb) versehen sind, in denen Verbindungsschrauben (10) und Gegenstücke (11) liegen.

## Claims

1. Housing for the installation of electrical or electronic components or groups of components with a lower housing part (1) and an upper housing part (2) wherein the lower housing part (1) and upper housing part (2) are connectable with each other through connecting devices and wherein a connecting device is a hinge which has recesses (5a) and projections (5b) in the two arms which engage with force-locking action into associated areas on the upper housing part (2) on one side and on the lower housing part (1) on the other side,
characterised in that both the upper housing part (2) and the lower housing part (1) have moulded attachments (2a) on which different plastics parts (3,4,6,7) can be selectively added wherein some plastics parts (3,4) form the areas for connecting with the hinge designed as a piano band hinge (5) and other plastics parts (6,7) form the complementary areas of a detent closure.

2. Housing according to claim 1 characterised in that a plastics part (6) has a locking cylinder (8) whose locking member (8a) engages and blocks behind an area of the opposite plastics part (7).

3. Housing according to claim 1 or 2 characterised in that the attachments (2a or la) moulded on the upper housing part (2) and lower housing part (1) have socket openings (2b and 1b) for the clamping engaging studs (3a and 4a; 6b and 7b) of the associated plastics parts (3 and 4; 6 and 7).

4. Housing according to one or more of claims 1 to 3 characterised in that the opposing attachments (2a,1a) moulded on the upper housing part (2) and lower housing part (1) are provided with socket openings (2b;1b) in which lie the connecting screws (10) and counter pieces (11).

## Revendications

1. Boîtier pour le montage de composants et assemblages électriques ou électroniques avec une partie inférieure et une partie supérieure pouvant être assemblées à l'aide de dispositifs de raccordement, l'un de ceux-ci pouvant être une charnière dont les deux pièces présentent, des évidements resp. des saillies s'engageant géométriquement dans les zones correspondantes de la partie supérieure du boîtier, d'une part, et de la partie inférieure du boîtier, d'autre part,
caractérisé en ce que
la partie supérieure (2) tout comme la partie inférieure (1) du boîtier présentent des garnitures (2a) formées, d'une pièces à partir d'elles, garnitures (2a) auxquelles différentes pièces en matières plastiques (3, 4, 6, 7) peuvent être montées au choix, quelques-unes de ces pièces en matière plastique (3, 4) formant les zones de raccordement à la charnière conçue sous forme de charnière en bande (5), tandis que d'autres pièces en matière plastique (6, 7) forment les zones d'une fermeture d'arrêt qui se complètent mutuellement.

2. Boîtier selon la revendication 1,
caractérisé en ce que
la pièce en matière plastique (6) présente un cylindre de verrouillage (8) dont l'organe de blocage (8a) saisit une zone de la pièce en matière plastique (7) lui faisant face et s'engage derrière cette zone aux fins de blocage.

3. Boîtier selon la revendication 1 ou 2,
caractérisé en ce que,
les garnitures (2a resp. la), formées d'une pièce à partir de la partie supérieure (2) et de la partie inférieure (1) du boîtier, présentent des ouvertures de réception (2b resp. lb) destinés à accueillir des tenons (3a resp. 4a; 6b resp. 7b) qui équipent les pièces en matière plastique (3 resp. 4; 6 resp. 7) correspondantes aux fins de blocage.

4. Boîtier selon une ou plusieurs revendications 1 à 3,
caractérisé en ce que
les garnitures (2a resp. la) opposées, formées d'une pièce à partir de la partie supérieure (2) et de la partie inférieure (1) du boîtier sont pourvues d'ouvertures de réception (2b resp. lb) destinés à accueillir des vis de raccordement (10) et des contre-pièces (11).
